# EUROPÄISCHE PATENTSCHRIFT

(11) **EP 3 604 722 B1**
(45) Veröffentlichungstag und Bekanntmachung des Hinweises auf die Patenterteilung: **06.01.2021**
(21) Anmeldenummer: 19187896.6
(22) Anmeldetag: 23.07.2019
(51) Int. Cl.: E05B 81/14, E05B 83/16, E05B 85/26

(54) **SCHLOSS**
LOCK
SERRURE

(30) Priorität: 01.08.2018 DE 102018118712
(43) Veröffentlichungstag der Anmeldung: 05.02.2020
(73) Patentinhaber: Witte Automotive GmbH, 42551 Velbert (DE)
(72) Erfinder: ALTIN, Kemal, 44892 Bochum (DE); KIRSCH, Gerrit, 47279 Duisburg (DE); JANSSEN, Thorsten, 42551 Velbert (DE); MENSCH, Reinaldo, 42113 Wuppertal (DE)
(74) Vertreter: Manitz Finsterwald Patent- und Rechtsanwaltspartnerschaft mbB

(56) Entgegenhaltungen:
- EP-A2- 1 617 023
- WO-A2-2015/062578
- DE-A1- 19 932 291

## Beschreibung

Die vorliegende Erfindung betrifft ein Schloss, insbesondere für eine Heckklappe eines Kraftfahrzeugs, mit einer zwischen einer Offenstellung und einer Geschlossenstellung um eine Drehachse verdrehbaren Drehfalle, einer Sperrklinke, welche mit der Drehfalle in ihrer Geschlossenstellung in Eingriff steht und zur Freigabe der Drehfalle von dieser lösbar ist, und einer Schenkelfeder, entgegen deren Rückstellkraft die Drehfalle aus ihrer Offenstellung in ihre Geschlossenstellung verdrehbar ist.

Ein derartiges Schloss ist grundsätzlich bekannt, zum Beispiel aus der EP 1 617 023 A2, und dient dazu, eine geschlossene Schließeinrichtung, wie zum Beispiel eine Heckklappe, eine Motorhaube oder eine Tür zu verriegeln. Hierfür nimmt das Schloss einen Schließbügel auf, welcher von der Drehfalle in ihrer Geschlossenstellung hintergriffen wird.

In der Geschlossenstellung steht die Drehfalle mit einer Sperrklinke in Eingriff, welche die Drehfalle gegen ein Aufdrehen aus der Geschlossenstellung in eine den Schließbügel freigebende Offenstellung blockiert. Hierzu ist die Sperrklinke mit einer Federkraft einer Sperrklinkenfeder beaufschlagt, welche die Sperrklinke gegen die Drehfalle drückt. Durch Außereingriffbringen von Sperrklinke und Drehfalle entgegen der Rückstellkraft der Sperrklinkenfeder bewirkt die die Drehfalle mit einer Federkraft beaufschlagende Schenkelfeder, dass die Drehfalle aus der Geschlossenstellung in ihre Offenstellung aufdreht und der Schließbügel von der Drehfalle freigegeben wird. Infolge lässt sich die entriegelte Schließeinrichtung öffnen.

Bisweilen kann es vorkommen, dass die Schließeinrichtung in ungewöhnlicher Weise belastet ist, zum Beispiel durch nach starkem Schneefall auf der Schließeinrichtung liegen gebliebenem Schnee. In diesem Fall kann es vorkommen, dass die Federkraft der Schenkelfeder nicht ausreicht, um die Drehfalle in ihre Offenstellung aufzudrehen, da der in der Drehfalle aufgenommene Schließbügel aufgrund der Schneelast ein Aufdrehen der Drehfalle verhindert. Da die Sperrklinke nach Ablauf einer vorgegebenen Zeitspanne normalerweise wieder zufällt, würde sie die Drehfalle wieder blockieren, d.h. die Schließeinrichtung würde sich selbst dann nicht mehr öffnen lassen, wenn sie von ihrer Last, wie beispielsweise Schnee, befreit würde. Vielmehr müsste der Entriegelungsvorgang des Schlosses dann vollständig neu durchgeführt werden, was in der Praxis als unbequem empfunden wird.

Um zu verhindern, dass die Sperrklinke vorzeitig wieder zufällt und die Drehfalle in unerwünschter Weise blockiert, ist es bekannt, eine ausgehobene Sperrklinke entgegen der Rückstellkraft der Sperrklinkenfeder so lange in der ausgehobenen Lage zu halten, bis die Drehfalle in ihre Offenstellung aufgedreht ist (sogenannte "Schneelastfunktion").

Eine Aufgabe der Erfindung besteht darin, ein Schloss der vorgenannten Art mit einer einfacheren Bauweise, insbesondere mit weniger Bauteilen, zu schaffen.

Die Aufgabe wird durch ein Schloss mit den Merkmalen des Anspruchs 1 gelöst.

Das erfindungsgemäße Schloss umfasst eine zwischen einer Offenstellung und einer Geschlossenstellung um eine Drehachse verdrehbare Drehfalle, eine Sperrklinke, welche mit der Drehfalle in ihrer Geschlossenstellung in Eingriff steht und zur Freigabe der Drehfalle von dieser lösbar ist, und eine Schenkelfeder, entgegen deren Rückstellkraft die Drehfalle aus ihrer Offenstellung in ihre Geschlossenstellung verdrehbar ist. Das erfindungsgemäße Schloss zeichnet sich dadurch aus, dass ein erster Schenkel der Schenkelfeder einen Stützabschnitt ausbildet, welcher durch Lösen der Sperrklinke von der Drehfalle mit einem an der Sperrklinke oder an einem mit der Sperrklinke zusammenwirkenden Stellhebel ausgebildeten Gegenlager in Eingriff bringbar ist, um die Sperrklinke in einer ausgehobenen Lage zu halten, wobei der Eingriff zwischen dem Stützabschnitt und dem Gegenlager durch eine Verdrehung der Drehfalle aus der Geschlossenstellung in die Offenstellung lösbar ist.

Der Erfindung liegt der allgemeine Gedanke zugrunde, die in einem Schloss ohnehin vorhandene Schenkelfeder zum Aufdrehen der Drehfalle aus der Geschlossenstellung in die Offenstellung mit einer zusätzlichen Funktion zu versehen, indem ein erster Schenkel der Schenkelfeder einen Stützabschnitt ausbildet, welcher durch Außereingriffbringen von Sperrklinke und Drehfalle mit einem an der Sperrklinke oder an einem mit der Sperrklinke zusammenwirkenden Stellhebel ausgebildeten Gegenlager in Eingriff gebracht werden kann, um die Sperrklinke so lange in ihrer ausgehobenen Lage zu halten, bis die Drehfalle in ihre Offenstellung aufgedreht ist. Auf diese Weise wird verhindert, dass die Sperrklinke vorzeitig zufällt und die Drehfalle in ihrer Geschlossenstellung oder einer Zwischenstellung blockiert, bevor sie ihre Offenstellung erreicht hat.

Indem die Schenkelfeder sowohl zum Aufdrehen der Drehfalle als auch zum Halten der ausgehobenen Sperrklinke dient, insbesondere über einen bestimmten Verdrehungswinkel der Drehfalle hinweg, übt die Schenkelfeder eine Doppelfunktion aus. Hieraus ergibt sich der Vorteil, dass weniger Bauteile benötigt werden, wodurch das Schloss eine einfachere Bauweise aufweist, zuverlässiger ist und sich außerdem Herstellungskosten des Schlosses senken lassen.

Es versteht sich, dass das erfindungsgemäße Schloss nicht nur für eine Heccklappe, sondern auch für eine Motorhaube, eine Tür oder dergleichen verwendet werden kann.

Vorteilhafte Ausbildungen der Erfindung sind den Unteransprüchen, der Beschreibung und den beigefügten Zeichnungen zu entnehmen.

Die Sperrklinke kann um eine zu der Drehachse zumindest annähernd parallel ausgerichtete Schwenkachse verschwenkt werden. Weist das Schloss einen mit der Sperrklinke zusammenwirkenden Stellhebel auf, so können der Stellhebel und die Sperrklinke um eine gemeinsame Schwenkachse verschwenkbar sein.

Der Stellhebel weist bevorzugt einen Mitnehmer für die Sperrklinke auf, welcher dazu dient, bei einer Verschwenkung des Stellhebels von der Drehfalle weg die Sperrklinke auszuheben. Mit anderen Worten bewegen sich der Stellhebel und die Sperrklinke stets gemeinsam von der Drehfalle weg. Dahingegen ist in der umgekehrten Richtung, d.h. auf die Drehfalle zu, eine unabhängige Verschwenkung von Sperrklinke und Stellhebel möglich.

Vorzugsweise verhindert der Mitnehmer des Stellhebels außerdem, dass die Sperrklinke in ihre die Drehfalle blockierende Stellung zurückfallen kann, so lange sich der Stellhebel in seiner von der Drehfalle wegverschwenkten Stellung befindet.

Damit die Sperrklinke die Drehfalle bei einer Verdrehung der Drehfalle aus der Offenstellung in die Geschlossenstellung wieder in der Geschlossenstellung blockieren kann, ist ein Mittel zum Lösen des Eingriffs zwischen dem Stützabschnitt und dem Gegenlager ab einer fortgeschrittenen Verdrehung der Drehfalle aus der Geschlossenstellung in die Offenstellung vorgesehen. Unter einer fortgeschrittenen Verdrehung der Drehfalle ist zu verstehen, dass die Drehfalle zumindest so weit in Richtung der Offenstellung verdreht ist, dass die aus der ausgehobenen Stellung zufallende Sperrklinke weder mit einer Hauptraste noch mit einer gegebenenfalls vorgesehenen Vorraste der Drehfalle in Eingriff gelangt. Vorzugsweise ist die Drehfalle bei einer fortgeschrittenen Verdrehung mindestens um die Hälfte, bevorzugt um mindestens drei Viertel und besonders bevorzugt um mindestens vier Fünftel des Weges zwischen der Geschlossenstellung und der Offenstellung verdreht. Insbesondere ist der Eingriff zwischen dem Stützabschnitt und dem Gegenlager gelöst, wenn sich die Drehfalle in ihrer Offenstellung befindet.

Zum Lösen des Eingriffs zwischen dem Stützabschnitt und dem Gegenlager ist vorzugsweise eine Rampe vorgesehen, auf welche der Stützabschnitt bei einer Verdrehung der Drehfalle aus der Geschlossenstellung in ihre Offenstellung aufläuft. Bevorzugt ist die Rampe an der Drehfalle ausgebildet, wodurch sich das Schloss noch einfacher gestalten lässt.

Für einen besonders wirksamen Eingriff zwischen dem Stützelement und dem Gegenlager liegen das Gegenlager und der mit dem Gegenlager in Eingriff befindliche Stützabschnitt vorzugsweise in einer gemeinsamen Ebene. Die gemeinsame Ebene kann zumindest annähernd senkrecht zur Drehachse der Drehfalle ausgerichtet sein. Bevorzugt ist die gemeinsame Ebene parallel zu einer Ebene, in welcher die Drehfalle verdreht werden kann.

Ist der Eingriff zwischen dem Stützabschnitt und dem Gegenlager gelöst, indem beispielsweise der erste Schenkel auf die Rampe aufläuft, kann der Stützabschnitt aus der gemeinsamen Ebene herausragen. Insbesondere ist dabei der Stützabschnitt in axialer Richtung, d.h. in Richtung der Drehachse der Drehfalle, von der Drehfalle weg ausgelenkt. Es versteht sich, dass der erste Schenkel der Schenkelfeder federelastisch ausgebildet sein kann, wodurch sich der erste Schenkel besonders gut auslenken lässt und bei einer Verdrehung der Drehfalle aus der Offenstellung in die Geschlossenstellung wieder seine ursprüngliche Position einnimmt, d.h. wenn der erste Schenkel nicht auf der Rampe aufliegt.

Zur Führung des ersten Schenkels der Schenkelfeder, insbesondere wenn der Eingriff zwischen dem Stützabschnitt des ersten Schenkels und dem Gegenlager gelöst ist, kann die Sperrklinke bzw. der Stellhebel einen Führungsabschnitt für den aus der gemeinsamen Ebene ragenden ersten Schenkel der Schenkelfeder aufweisen, welcher beim Lösen der Sperrklinke von der Drehfalle bzw. bei einer Verschwenkbewegung des Stellhebels von der Drehfalle weg den ersten Schenkel führt. Vorzugsweise ist der Führungsabschnitt quer, insbesondere zumindest annähernd senkrecht, zu dem Gegenlager ausgerichtet. Gemäß einer vorteilhaften Ausgestaltung beschreibt der Führungsabschnitt einen Kreisbogen, welcher zumindest abschnittsweise die Schwenkachse der Sperrklinke zumindest annähernd koaxial umgibt.

Die Rampe kann ferner eine zum Abstützen eines an der Sperrklinke bzw. an dem Stellhebel ausgebildeten Stützvorsprungs aufweisen, wenn im gelösten Zustand der Sperrklinke bzw. im von der Drehfalle wegverschwenkten Zustand des Stellhebels der Eingriff zwischen dem Stützabschnitt der Schenkelfeder und dem Gegenlager der Sperrklinke bzw. des Stellhebels gelöst ist. Der sich an der Stützfläche abstützende Stützvorsprung verhindert, dass der Stützabschnitt und das Gegenlager wieder in Eingriff gelangen, wenn die Drehfalle aus der Offenstellung in die Geschlossenstellung verdreht wird. Vorzugsweise ist die Stützfläche der Sperrklinke bzw. dem Stellhebel zugewandt.

Vorzugsweise ist der Stützvorsprung in Richtung der Drehachse der Drehfalle gesehen in einer Ebene zwischen dem Gegenlager und einem Maul der Drehfalle ausgebildet. Außerdem kann er weiter in Richtung der Drehfalle hervorragen als das Gegenlager. Das Maul der Drehfalle dient in der Geschlossenstellung der Drehfalle zur Aufnahme des Schließbügels.

Es ist von Vorteil, wenn die Rampe zumindest abschnittsweise einen Kreisbogen beschreibt. Dabei kann die kreisbogenartige Rampe die Drehachse der Drehfalle zumindest abschnittsweise und zumindest annähernd koaxial umgeben. Durch die kreisbogenartige Ausgestaltung der Rampe ist vorzugsweise auch die an der Rampe ausgebildete Stützfläche entsprechend gekrümmt, wodurch der an der Sperrklinke ausgebildete Stützvorsprung bei einer Verdrehung der Drehfalle besser entlang der Stützfläche gleiten kann.

Der Stützabschnitt lässt sich auf besonders einfache Weise durch Umbiegen, insbesondere Umbiegen um einen Winkel von zumindest annähernd 90°, eines Endabschnitts des ersten Schenkels der Schenkelfeder erzeugen, so dass der Stützabschnitt einen Endabschnitt des ersten Schenkels der Schenkelfeder bildet. Es versteht sich, dass der Stützabschnitt aber auch an einem anderen Abschnitt ausgebildet sein kann, zum Beispiel kann der Stützabschnitt auch an einem zu dem Endabschnitt versetzten Zwischenabschnitt des ersten Schenkels ausgebildet sein.

Der erste Schenkel der Schenkelfeder ist bevorzugt gegen eine Verdrehung gesichert, wenn die Drehfalle verdreht wird, d.h. der erste Schenkel bewegt sich bei einer Verdrehung der Drehfalle nicht mit dieser mit. Vorteilhafterweise stützt sich der erste Schenkel der Schenkelfeder an einem zur Lagerung der Drehfalle vorgesehenen Gehäuse ab. Dahingegen kann sich ein zweiter Schenkel der Schenkelfeder an der Drehfalle abstützen und bei einer Verdrehung der Drehfalle mitbewegen.

Vorzugsweise besteht die Schenkelfeder aus einem Metallmaterial, insbesondere einem Federstahl. Hierdurch ist die Schenkelfeder besonders stabil. Überdies ermöglicht eine derartige Materialwahl, dass der erste Schenkel der Schenkelfeder federelastisch sein kann. Grundsätzlich kann die Schenkelfeder aber auch aus einem anderen Material bestehen, wie zum Beispiel einem Kunststoffmaterial. Gemäß einer vorteilhaften Ausgestaltung ist ein Elektromotor zum Ausheben der Sperrklinke vorgesehen.

Nachfolgend wird die Erfindung rein beispielhaft anhand einer vorteilhaften Ausführungsform unter Bezugnahme auf die beigefügten Zeichnungen beschrieben. Es zeigen:
- Fig. 1: zeigt eine Draufsicht auf ein Schloss mit einer Sperrklinke und einer in einer Geschlossenstellung befindlichen Drehfalle;
- Fig. 2: das Schloss von Fig. 1 mit ausgehobener Sperrklinke;
- Fig. 3: das Schloss von Fig. 1 mit in einer Offenstellung befindlicher Sperrklinke; und
- Fig. 4: das Schloss von Fig. 3 in perspektivischer Ansicht.

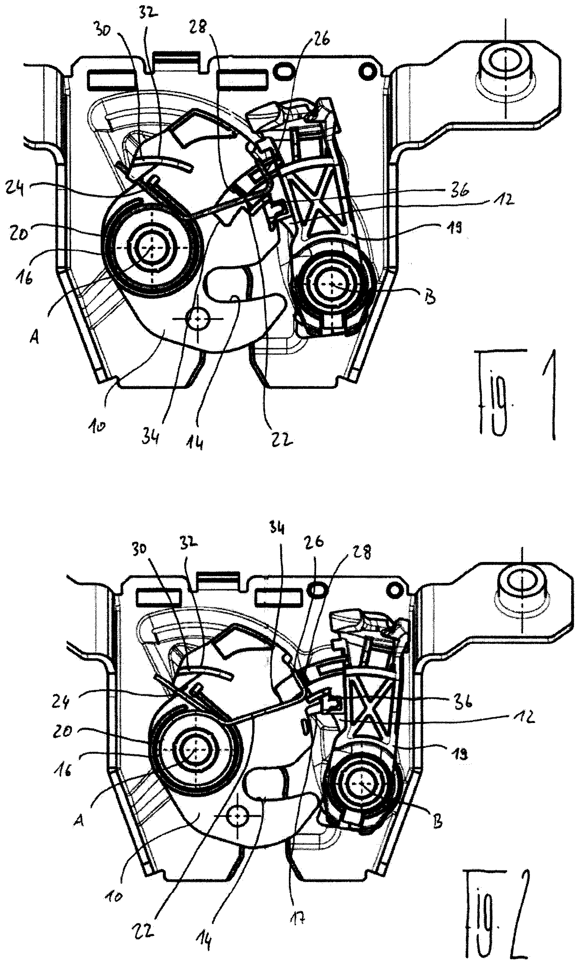

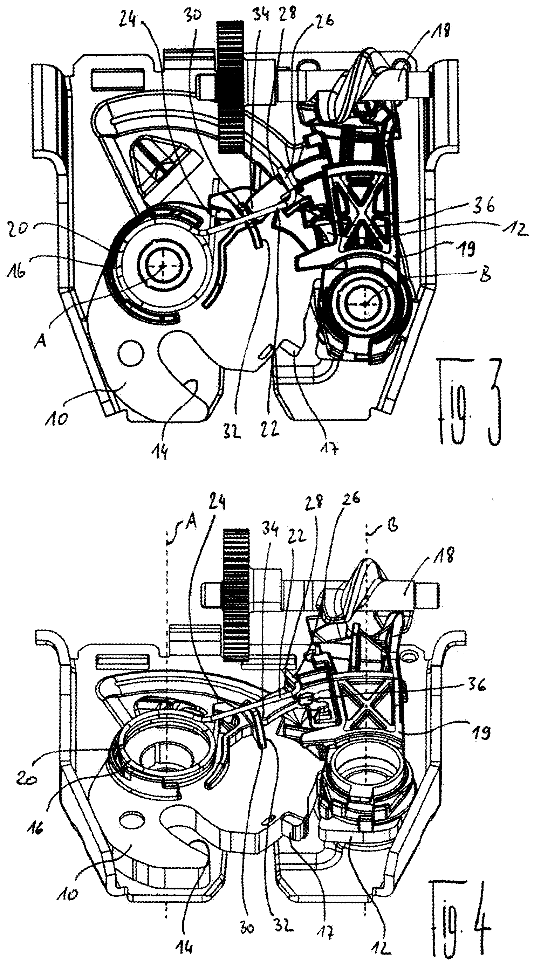

Die Figuren zeigen ein Schloss, insbesondere für eine Heckklappe oder eine Motorhaube eines Kraftfahrzeugs. Das Schloss umfasst eine zwischen einer Offenstellung (Fig. 3 und 4) und einer Geschlossenstellung (Fig. 1 und 2) um eine Drehachse A verdrehbare Drehfalle 10 sowie eine um eine Schwenkachse B verschwenkbare Sperrklinke 12. Die Drehachse A der Drehfalle 10 und die Schwenkachse B der Sperrklinke 12 sind zueinander beabstandet und zumindest annähernd parallel zueinander ausgerichtet.

Die Drehfalle 10 weist ein Maul 14 auf, welches in der Geschlossenstellung der Drehfalle 10 dazu dient, einen in den Figuren nicht dargestellten Schließbügel zu hintergreifen, um die Heckklappe oder die Motorhaube zu verriegeln. Durch Aufdrehen der Drehfalle 10 aus der Geschlossenstellung in ihre Offenstellung wird der Schließbügel frei gegeben und die Heckklappe oder die Motorhaube lässt sich öffnen.

Eine die Drehfalle 10 mit einer Federkraft beaufschlagende Schenkelfeder 16 bewirkt, dass sich die Drehfalle 10 selbständig aus der Geschlossenstellung in die Offenstellung aufdrehen kann, d.h. die Drehfalle 10 ist entgegen der Rückstellkraft der Schenkelfeder 16 aus der Offenstellung in die Geschlossenstellung verdrehbar. Um ein selbständiges Aufdrehen der Drehfalle 10 aus der Geschlossenstellung in die Offenstellung zu verhindern, wirkt die Sperrklinke 12 in einer zugefallenen Lage mit einer in den Fig. 2 bis 4 besonders gut erkennbaren Hauptraste 17 der Drehfalle 10 zusammen und blockiert die Drehfalle 10 in der Geschlossenstellung gegen ein Aufdrehen in die Offenstellung. Durch Ausheben der Sperrklinke 12, d.h. durch Aufheben der Blockierung, wird die Drehfalle 10 freigegeben, damit sie in die Offenstellung aufdrehen kann.

Zum Ausheben der Sperrklinke 12 ist ein in den Figuren nicht dargestelltes Antriebsmittel in Form eines Elektromotors vorgesehen. Das Antriebsmittel dient dazu, ein in Fig. 1 und 2 nicht dargestelltes Schneckengetriebe 18 anzutreiben, mittels welchem ein mit der Sperrklinke 12 zusammenwirkender Stellhebel 19 aus seiner Ausgangslage von der Drehfalle 10 wegbewegbar bzw. aushebbar ist.

Der Stellhebel 19 weist einen in den Figuren nicht erkennbaren Mitnehmer auf, welcher bei einer Verschwenkung des Stellhebels 19 von der Drehfalle 10 weg die Sperrklinke 12 mitnimmt und von der Drehfalle 10 löst, wodurch die Drehfalle 10 freigegeben wird, so dass die Drehfalle 10 in ihre Offenstellung aufdrehen kann. Dabei vollführen der Stellhebel 19 und die Sperrklinke 12 eine gemeinsame Verschwenkung um die Schwenkachse B. In der umgekehrten Richtung, d.h. auf die Drehfalle zu, ist dahingegen eine unabhängige Verschwenkung von Sperrklinke 12 und Stellhebel 19 möglich, so dass die Sperrklinke 12 in die die Drehfalle 10 blockierende Stellung und der Stellhebel 19 in seine Ausgangslage zurückschwenken können.

Der an dem Stellhebel 19 ausgebildete Mitnehmer dient nicht nur zum Ausheben der Sperrklinke 12, sondern verhindert auch, dass die ausgehobene Sperrklinke wieder in die die Drehfalle 10 blockierende Stellung zurückfallen kann, so lange sich der Stellhebel 19 in seiner von der Drehfalle wegverschwenkten Stellung befindet.

Die Schenkelfeder 16 besteht aus einem Metallmaterial und weist eine die Drehachse A der Drehfalle 10 koaxial umgebende Windung 20 auf. Bevorzugt ist die Schenkelfeder 16 aus einem Federstahl gefertigt. Aus der Windung 20 der Schenkelfeder 16 gehen ein erster Schenkel 22 sowie ein zweiter Schenkel 24 hervor.

Der erste Schenkel 22 ist durch ein zur Lagerung der Drehfalle 10 vorgesehenes Gehäuse gegen eine Verdrehung gemeinsam mit der Drehfalle 10 gesichert. Der zweite Schenkel 24 stützt sich dahingegen an der Drehfalle 10 ab und bewegt sich bei einer Verdrehung der Drehfalle 10 mit dieser mit.

An einem Endabschnitt des ersten Schenkels 22 ist ein Stützabschnitt 26 ausgebildet, welcher durch Ausheben der Sperrklinke 12 mit einem an dem Stellhebel 19 ausgebildeten Gegenlager 28 in Eingriff bringbar ist, um die Sperrklinke 12 in einer ausgehobenen Lage zu halten (Fig. 2 bis 4). Hierdurch wird verhindert, dass die Sperrklinke 12 wieder einrastet und die Drehfalle 10 blockiert, wenn sich die Drehfalle 10 trotz Ausheben der Sperrklinke 12 nicht in die Offenstellung aufdreht, z.B. weil die Heckklappe oder die Motorhaube durch das Gewicht von auf der Heckklappe oder der Motorhaube liegendem Schnee belastet ist. Es versteht sich, dass das Gegenlager 28 grundsätzlich auch an der Sperrklinke 12 ausgebildet sein kann, wenn kein Stellhebel 19 zum Ausheben der Sperrklinke 12 vorgesehen ist. Dabei erfüllt das an der Sperrklinke 12 ausgebildete Gegenlager 28 dieselbe Funktion, wie das an dem Stellhebel 19 ausgebildete Gegenlager 28.

Um nach dem Aufdrehen der Drehfalle 10 jedoch ein erneutes Abstützen der Sperrklinke 12 an der Drehfalle 10 bewirken zu können, lässt sich der Eingriff zwischen dem Stützabschnitt 26 der Schenkelfeder 16 und dem Gegenlager 28 des Stellhebels 19 bei einer fortgeschrittenen Verdrehung der Drehfalle 10 aus der Geschlossenstellung in die Offenstellung lösen. Zu diesem Zweck ist an der Drehfalle 10 eine Rampe 30 ausgebildet, welche zumindest abschnittsweise einen Kreisbogen beschreibt. Dabei läuft zum Lösen des Eingriffs zwischen dem Stützabschnitt 26 und dem Gegenlager 28 der erste Schenkel 22 bei einer Verdrehung der Drehfalle 10 aus der Geschlossenstellung in die Offenstellung auf die Rampe 30 auf.

Befinden sich der Stützabschnitt 26 und das Gegenlager 28 in Eingriff, so liegen sie in einer gemeinsamen Ebene. Läuft der erste Schenkel 22 bei einer Verdrehung der Drehfalle 10 aus der Geschlossenstellung in die Offenstellung auf die Rampe 30 auf, so wird der erste Schenkel 22 in axialer Richtung bezüglich der Drehachse A der Drehfalle 10 in Richtung von der Drehfalle 10 weg ausgelenkt, gewissermaßen also angehoben, bis der Stützabschnitt 26 aus der gemeinsamen Ebene herausragt und der Eingriff zwischen dem Stützabschnitt 26 und dem Gegenlager 28 gelöst ist.

Die Rampe 30 weist ferner eine dem Stellhebel 19 zugewandte Stützfläche 32 auf, an welcher sich ein an der Sperrklinke 12 ausgebildeter Stützvorsprung 34 abstützt, wenn der Eingriff zwischen dem an dem ersten Schenkel 22 der Schenkelfeder 16 ausgebildeten Stützabschnitt 26 und dem Gegenlager 28 gelöst ist. Wie anhand von Fig. 4 besonders deutlich zu erkennen ist, ragt der Stützvorsprung 34 weiter in Richtung der Drehachse A der Drehfalle 10 hervor als das Gegenlager 28. Überdies liegt der Stützvorsprung 34 in Richtung der Drehachse A der Drehfalle 10 gesehen in einer Ebene, welche zwischen dem Gegenlager 28 und dem Maul 14 der Drehfalle 10 ausgebildet ist. Ist kein Stellhebel 19 zum Ausheben der Sperrklinke 12 vorgesehen, so kann der Stützvorsprung 34 auch an der Sperrklinke 12 ausgebildet sein, wobei der an der Sperrklinke 12 ausgebildete Stützvorsprung 34 dieselbe Funktion erfüllt, wie der an dem Stellhebel 19 ausgebildete Stützvorsprung 34.

Nachfolgend wird die Funktionsweise des Schlosses ausgehend von der in Fig. 1 dargestellten Geschlossenstellung der Drehfalle 10 erläutert. In der Geschlossenstellung stützt sich die Sperrklinke 12 an der Hauptraste 17 der Drehfalle 10 ab und blockiert diese gegen ein Aufdrehen in die Offenstellung. Durch ein Öffnungssignal bewegt das Antriebsmittel das Schneckengetriebe 18, wodurch der Stellhebel 19 bzw. die Sperrklinke 12 ausgehoben und von der Drehfalle 10 wegbewegt werden. Dabei wird der erste Schenkel 22 von einem an dem Stellhebel 19 ausgebildeten Führungsabschnitt 36 geführt. Vorzugsweise ist der Führungsabschnitt 36 hierfür quer bzw. zumindest annähernd senkrecht zu dem Gegenlager 28 ausgerichtet. Grundsätzlich kann der Führungsabschnitt 36 auch an der Sperrklinke 12 ausgebildet sein, wenn kein Stellhebel 19 vorgesehen ist.

Ist die Sperrklinke 12 vollständig ausgehoben, so gelangen der Stützabschnitt 26 und das Gegenlager 28 in Eingriff, wodurch die Sperrklinke 12 in einer ausgehobenen Lage zu der Drehfalle 10 beabstandet gehalten wird (Fig. 2). Da nunmehr die Sperrklinke 12 die Drehfalle 10 nicht mehr gegen ein Aufdrehen blockiert, kann die Drehfalle 10 durch die Federkraft der Schenkelfeder 16 in die Offenstellung aufdrehen (Fig. 3 und 4).

Durch das Halten der Sperrklinke 12 auf Abstand zu der Drehfalle 10 ist sichergestellt, dass sich die Drehfalle 10 auch dann noch in die den Schließbügel freigebende Offenstellung aufdrehen kann, wenn die Heckklappe oder die Motorhaube nach dem Ausheben der Sperrklinke 12 nicht sofort, sondern zeitlich verzögert geöffnet wird, z.B. weil zunächst noch auf der Heckklappe oder der Motorhaube befindlicher Schnee entfernt wurde.

Durch eine Verdrehung der Drehfalle 10 aus der Geschlossenstellung in die Offenstellung läuft der erste Schenkel 22 auf die Rampe 30 auf und der Eingriff zwischen dem Stützabschnitt 26 des ersten Schenkels 22 und dem Gegenlager 28 wird gelöst. Gleichzeitig schlägt der Stützvorsprung 34 an der Stützfläche 32 der Rampe 30 an, wodurch die Sperrklinke 12 auch in der Offenstellung der Drehfalle 10 noch in der ausgehobenen Lage gehalten wird.

Wird die Drehfalle 10 anschließend aus der Offenstellung in ihre Geschlossenstellung zurück verdreht, so verhindert die Rampe 30, dass der Stützabschnitt 26 und das Gegenlager 28 in Eingriff gelangen können, bevor die Drehfalle 10 ihre Geschlossenstellung erreicht. Sobald die Drehfalle 10 ihre Geschlossenstellung erreicht hat, können die Sperrklinke 12 und der Stellhebel 19 ungehindert zurückschwenken, und die Drehfalle 10 wird wieder durch Zusammenwirken der Sperrklinke 12 mit der Hauptraste 17 gegen ein Aufdrehen in die Offenstellung blockiert.

### Bezugszeichenliste

- 10: Drehfalle
- 12: Sperrklinke
- 14: Maul
- 16: Schenkelfeder
- 17: Hauptraste
- 18: Schneckengetriebe
- 19: Stellhebel
- 20: Windung
- 22: erster Schenkel
- 24: zweiter Schenkel
- 26: Stützabschnitt
- 28: Gegenlager
- 30: Rampe
- 32: Stützfläche
- 34: Stützvorsprung
- 36: Führungsabschnitt

- A: Drehachse
- B: Schwenkachse

## Patentansprüche

1. Schloss, insbesondere für eine Heckklappe eines Kraftfahrzeugs, mit
einer zwischen einer Offenstellung und einer Geschlossenstellung um eine Drehachse (A) verdrehbaren Drehfalle (10),
einer Sperrklinke (12), welche mit der Drehfalle (10) in ihrer Geschlossenstellung in Eingriff steht und zur Freigabe der Drehfalle (10) von dieser lösbar ist, und
einer Schenkelfeder (16), entgegen deren Rückstellkraft die Drehfalle (10) aus ihrer Offenstellung in ihre Geschlossenstellung verdrehbar ist,
**dadurch gekennzeichnet, dass**
ein erster Schenkel (22) der Schenkelfeder (16) einen Stützabschnitt (26) ausbildet, welcher durch Lösen der Sperrklinke (12) von der Drehfalle (10) mit einem an der Sperrklinke (12) oder an einem mit der Sperrklinke (12) zusammenwirkenden Stellhebel (19) ausgebildeten Gegenlager (28) in Eingriff bringbar ist, um die Sperrklinke (12) in einer ausgehobenen Lage zu halten, wobei der Eingriff zwischen dem Stützabschnitt (26) und dem Gegenlager (28) durch eine Verdrehung der Drehfalle (10) aus der Geschlossenstellung in die Offenstellung lösbar ist.

2. Schloss nach Anspruch 1,
**gekennzeichnet durch**
ein Mittel zum Lösen des Eingriffs zwischen dem Stützabschnitt (26) und dem Gegenlager (28) ab einer fortgeschrittenen Verdrehung der Drehfalle (10) aus der Geschlossenstellung in die Offenstellung.

3. Schloss nach Anspruch 1 oder 2,
**gekennzeichnet durch**
eine Rampe (30) zum Lösen des Eingriffs zwischen dem Stützabschnitt (26) und dem Gegenlager (28), auf welche der Stützabschnitt (26) bei einer Verdrehung der Drehfalle (10) aus der Geschlossenstellung in ihre Offenstellung aufläuft.

4. Schloss nach Anspruch 3,
**dadurch gekennzeichnet, dass**
die Rampe (30) an der Drehfalle (10) ausgebildet ist.

5. Schloss nach zumindest einem der vorstehenden Ansprüche,
**dadurch gekennzeichnet, dass**
das Gegenlager (28) und der mit dem Gegenlager (28) in Eingriff befindliche Stützabschnitt (26) in einer gemeinsamen Ebene liegen.

6. Schloss nach Anspruch 5,
**dadurch gekennzeichnet, dass**
der Stützabschnitt (26) aus der gemeinsamen Ebene herausragt, wenn der Eingriff zwischen dem Stützabschnitt (26) und dem Gegenlager (28) gelöst ist.

7. Schloss nach Anspruch 6,
**dadurch gekennzeichnet, dass**
die Sperrklinke (12) einen Führungsabschnitt (36) für den aus der gemeinsamen Ebene ragenden ersten Schenkel (22) der Schenkelfeder (16) aufweist, welcher beim Lösen der Sperrklinke (12) von der Drehfalle (10) den ersten Schenkel (22) führt oder
der Stellhebel (19) einen Führungsabschnitt (36) für den aus der gemeinsamen Ebene ragenden ersten Schenkel (22) der Schenkelfeder (16) aufweist, welcher bei einer Verschwenkbewegung des Stellhebels (19) von der Drehfalle (10) weg führt.

8. Schloss nach Anspruch 7,
**dadurch gekennzeichnet, dass**
der Führungsabschnitt (36) quer, insbesondere zumindest annähernd senkrecht, zu dem Gegenlager (28) ausgerichtet ist.

9. Schloss nach zumindest einem der Ansprüche 3 bis 8,
**dadurch gekennzeichnet, dass**
die Rampe (30) eine Stützfläche (32) zum Abstützen eines an der Sperrklinke (12) ausgebildeten Stützvorsprungs (34) aufweist, wenn im gelösten Zustand der Sperrklinke (12) der Eingriff zwischen dem Stützabschnitt (26) der Schenkelfeder (16) und dem Gegenlager (28) gelöst ist oder
die Rampe (30) eine Stützfläche (32) zum Abstützen eines an dem Stellhebel (19) ausgebildeten Stützvorsprungs (34) aufweist, wenn im von der Drehfalle (10) wegverschwenkten Zustand des Stellhebels (19) der Eingriff zwischen dem Stützabschnitt (26) der Schenkelfeder (16) und dem Gegenlager (28) gelöst ist.

10. Schloss nach Anspruch 9,
**dadurch gekennzeichnet, dass**
der Stützvorsprung (34) in Richtung der Drehachse (A) der Drehfalle (10) gesehen in einer Ebene zwischen dem Gegenlager (28) und einem Maul (14) der Drehfalle (10) ausgebildet ist.

11. Schloss nach Anspruch 9 oder 10,
**dadurch gekennzeichnet, dass**
der Stützvorsprung (34) weiter in Richtung der Drehfalle (10) hervorragt als das Gegenlager (28).

12. Schloss nach zumindest einem der Ansprüche 3 bis 11,
**dadurch gekennzeichnet, dass**
die Rampe (30) zumindest abschnittsweise einen Kreisbogen beschreibt.

13. Schloss nach zumindest einem der vorstehenden Ansprüche,
**dadurch gekennzeichnet, dass**
der Stützabschnitt (26) einen Endabschnitt des ersten Schenkels (22) der Schenkelfeder (16) bildet.

14. Schloss nach zumindest einem der vorstehenden Ansprüche,
**dadurch gekennzeichnet, dass**
der erste Schenkel (22) bei einer Verdrehung der Drehfalle (10) gegen eine Verdrehung um die Drehachse (A) der Drehfalle (10) gesichert ist.

15. Schloss nach zumindest einem der vorstehenden Ansprüche,
**dadurch gekennzeichnet, dass**
die Schenkelfeder (16) aus einem Metallmaterial, insbesondere einem Federstahl, besteht.

## Claims

1. A lock, in particular for a tailgate of a motor vehicle, comprising
a rotary latch (10) rotatable about an axis of rotation (A) between an open position and a closed position;
a pawl (12) which is in engagement with the rotary latch (10) in its closed position and which can be released therefrom to release the rotary latch (10); and
a leg spring (16) against whose return force the rotary latch (10) can be rotated from its open position into its closed position, **characterized in that**
a first leg (22) of the leg spring (16) forms a support section (26) which, by releasing the pawl (12) from the rotary latch (10), can be brought into engagement with a counter-bearing (28), which is formed at the pawl (12) or at an adjustment lever (19) cooperating with the pawl (12), in order to hold the pawl (12) in a raised position, with the engagement between the support section (26) and the counter-bearing (28) being releasable by a rotation of the rotary latch (10) from the closed position into the open position.

2. A lock in accordance with claim 1,
**characterized by**
a means for releasing the engagement between the support section (26) and the counter-bearing (28) from an advanced rotation of the rotary latch (10) from the closed position into the open position.

3. A lock in accordance with claim 1 or claim 2,
**characterized by**
a ramp (30) for releasing the engagement between the support section (26) and the counter-bearing (28), onto which ramp (30) the support section (26) runs on a rotation of the rotary latch (10) from the closed position into its open position.

4. A lock in accordance with claim 3,
**characterized in that**
the ramp (30) is formed at the rotary latch (10).

5. A lock in accordance with at least one of the preceding claims,
**characterized in that**
the counter-bearing (28) and the support section (26) in engagement with the counter-bearing (28) are disposed in a common plane.

6. A lock in accordance with claim 5,
**characterized in that**
the support section (26) projects from the common plane when the engagement between the support section (26) and the counter-bearing (28) is released.

7. A lock in accordance with claim 6,
**characterized in that**
the pawl (12) has a guide section (36) for the first leg (22) of the leg spring (16) projecting from the common plane, said guide section (36) guiding the first leg (22) on the release of the pawl (12) from the rotary latch (10); or **in that** the adjustment lever (19) has a guide section (36) for the first leg (22) of the leg spring (16) projecting from the common plane, said guide section (36) guiding on a pivot movement of the adjustment lever (19) away from the rotary latch (10).

8. A lock in accordance with claim 7,
**characterized in that**
the guide section (36) is oriented transversely, in particular at least approximately perpendicular, to the counter-bearing (28).

9. A lock in accordance with at least one of the claims 3 to 8, **characterized in that**
the ramp (30) has a support surface (32) for supporting a support projection (34) formed at the pawl (12) when the engagement between the support section (26) of the leg spring (16) and the counter-bearing (28) is released in the released state of the pawl (12); or
**in that** the ramp (30) has a support surface (32) for supporting a support projection (34) formed at the adjustment lever (19) when the engagement between the support section (26) of the leg spring (16) and the counter-bearing (28) is released in the state of the adjustment lever (19) pivoted away from the rotary latch (10).

10. A lock in accordance with claim 9,
**characterized in that**
the support projection (34) is formed in a plane between the counter-bearing (28) and a mouth (14) of the rotary latch (10), viewed in the direction of the axis of rotation (A) of the rotary latch (10).

11. A lock in accordance with claim 9 or claim 10,
**characterized in that**
the support projection (34) projects further in the direction of the rotary latch (10) than the counter-bearing (28).

12. A lock in accordance with at least one of the claims 3 to 11,
**characterized in that**
the ramp (30) at least sectionally describes an arc of a circle.

13. A lock in accordance with at least one of the preceding claims,
**characterized in that**
the support section (26) forms an end section of the first leg (22) of the leg spring (16).

14. A lock in accordance with at least one of the preceding claims,
**characterized in that**
the first limb (22) is secured against a rotation about the axis of rotation (A) of the rotary latch (10) on a rotation of the rotary latch (10).

15. A lock in accordance with at least one of the preceding claims,
**characterized in that**
the leg spring (16) consists of a metal material, in particular of a spring steel.

## Revendications

1. Serrure, en particulier pour un hayon de véhicule automobile, comportant un pêne rotatif (10) pouvant tourner autour d'un axe de rotation (A) entre une position ouverte et une position fermée,
un cliquet d'arrêt (12) qui est en engagement avec le pêne rotatif (10) dans sa position fermée et qui peut être détaché du pêne rotatif (10) pour libérer celui-ci, et
un ressort à branches (16) à l'encontre de la force de rappel duquel le pêne rotatif (10) peut être tourné depuis sa position ouverte jusque dans sa position fermée,
**caractérisée en ce que**
une première branche (22) du ressort à branches (16) forme une portion de soutien (26) qui, par détachement du cliquet d'arrêt (12) depuis le pêne rotatif (10), peut être amenée en engagement avec une contre-butée (28) réalisée sur le cliquet d'arrêt (12) ou sur un levier de réglage (19) coopérant avec le cliquet d'arrêt (12), afin de maintenir le cliquet d'arrêt (12) en position relevée, l'engagement entre la portion de soutien (26) et la contre-butée (28) pouvant être défait par une rotation du pêne rotatif (10) de la position fermée à la position ouverte.

2. Serrure selon la revendication 1,
**caractérisée par**
un moyen pour défaire l'engagement entre la portion de soutien (26) et la contre-butée (28) à partir d'une rotation avancée du pêne rotatif (10) de la position fermée à la position ouverte.

3. Serrure selon la revendication 1 ou 2,
**caractérisée par**
une rampe (30) pour défaire l'engagement entre la portion de soutien (26) et la contre-butée (28), rampe sur laquelle la portion de soutien (26) monte lors d'une rotation du pêne rotatif (10) de la position fermée à sa position ouverte.

4. Serrure selon la revendication 3,
**caractérisée en ce que**
la rampe (30) est réalisée sur le pêne rotatif (10).

5. Serrure selon l'une au moins des revendications précédentes,
**caractérisée en ce que**
la contre-butée (28) et la portion de soutien (26) en engagement avec la contre-butée (28) se trouvent dans un plan commun.

6. Serrure selon la revendication 5,
**caractérisée en ce que**
la portion de soutien (26) fait saillie du plan commun lorsque l'engagement entre la portion de soutien (26) et la contre-butée (28) est défait.

7. Serrure selon la revendication 6,
**caractérisée en ce que**
le cliquet d'arrêt (12) présente une portion de guidage (36) pour la première branche (22) du ressort à branches (16) faisant saillie du plan commun, portion qui guide la première branche (22) lors du détachement du cliquet d'arrêt (12) depuis le pêne rotatif (10), ou
le levier de réglage (19) présente une portion de guidage (36) pour la première branche (22) du ressort à branches (16) faisant saillie hors du plan commun, portion qui mène en éloignement du pêne rotatif (10) lors d'un mouvement de pivotement du levier de réglage (19).

8. Serrure selon la revendication 7,
**caractérisée en ce que**
la portion de guidage (36) est orientée transversalement, en particulier au moins approximativement perpendiculairement, par rapport à la contre-butée (28).

9. Serrure selon l'une au moins des revendications 3 à 8,
**caractérisée en ce que**
la rampe (30) présente une surface de soutien (32) pour soutenir une saillie d'appui (34) réalisée sur le cliquet d'arrêt (12) lorsque l'engagement entre la portion de soutien (26) du ressort à branches (16) et la contre-butée (28) est défait à l'état détaché du cliquet d'arrêt (12) ou
la rampe (30) présente une surface de soutien (32) pour soutenir une saillie d'appui (34) réalisée sur le levier de réglage (19) lorsque l'engagement entre la portion de soutien (26) du ressort à branches (16) et la contre-butée (28) est défait à l'état pivoté du levier de réglage (19) en éloignement du pêne rotatif (10).

10. Serrure selon la revendication 9,
**caractérisée en ce que**
la saillie d'appui (34) est réalisée dans un plan entre la contre-butée (28) et une embouchure (14) du pêne rotatif (10), vue dans la direction de l'axe de rotation (A) du pêne rotatif (10).

11. Serrure selon la revendication 9 ou 10,
**caractérisée en ce que**
la saillie d'appui (34) fait saillie plus loin dans la direction du pêne rotatif (10) que la contre-butée (28).

12. Serrure selon l'une au moins des revendications 3 à 11,
**caractérisée en ce que**
la rampe (30) décrit au moins localement un arc de cercle.

13. Serrure selon l'une au moins des revendications précédentes,
**caractérisée en ce que**
la portion de soutien (26) forme une portion d'extrémité de la première branche (22) du ressort à branches (16).

14. Serrure selon l'une au moins des revendications précédentes,
**caractérisée en ce que**
lors d'une rotation du pêne rotatif (10), la première branche (22) est bloquée à l'encontre d'une rotation autour de l'axe de rotation (A) du pêne rotatif (10).

15. Serrure selon l'une au moins des revendications précédentes,
**caractérisée en ce que**
le ressort à branches (16) est constitué d'un matériau métallique, en particulier d'un acier à ressort.
